# DEMANDE DE BREVET EUROPEEN

(11) **EP 1 522 712 A2**
(43) Date de publication de la demande: **13.04.2005**
(21) Numéro de dépôt: 04300658.4
(22) Date de dépôt: 06.10.2004
(51) Int. Cl.: F02M 25/07

(54) **Dispositif d'admission d'air pour moteur à combustion interne à charge stratifiée avec recyclage de gaz.**

(30) Priorité: 06.10.2003 FR 0311673
(71) Demandeur: Renault s.a.s., 92100 Boulogne Billancourt (FR)
(72) Inventeur: DUMONT, Patrick, 91510, LARDY (FR); SAPERAS, Oriol, 75014, PARIS (FR)

(57) **Abrégé**

Dispositif d'admission d'air pour moteur à combustion interne du type comportant une pluralité de chambres de combustion munies de soupapes d'admission en air et en mélange d'air et de carburant véhiculés par des conduites d'admission 4, 6, avec en outre une conduite de recyclage 10, piquée sur au moins une conduite d'admission, pour l'admission d'une quantité pilotée de gaz d'échappement recyclés, caractérisé par le fait qu'à l'intérieur de ladite conduite d'admission 6 comportant le piquage 11 de la conduite de recyclage, est montée une cloison 7 mobile en translation radialement, ladite cloison étant disposée parallèlement à l'axe de la conduite d'admission 6 et s'étendant jusqu'à proximité de l'orifice d'admission 3 en étant capable d'obturer le piquage 11, ladite cloison présentant au voisinage de son extrémité opposée à l'orifice d'admission, une plaque d'obturation radiale 12.

## Description

La présente invention est relative aux moteurs à combustion interne, dans lesquels une quantité pilotée de gaz d'échappement recyclés (appelés couramment EGR, par abréviation de Exhaust Gas Recycling) est introduite à nouveau dans les cylindres du moteur après combustion.

Pour satisfaire aux normes de plus en plus sévères en ce qui concerne la limitation de gaz polluants à l'échappement des moteurs à . combustion interne, on sait qu'il peut être intéressant de recycler à l'admission une partie des gaz d'échappement. Afin d'augmenter le taux de recyclage à l'admission dans le moteur, il est nécessaire de stratifier dans les cylindres les gaz d'échappement recyclés, d'une part, et le mélange frais d'air et de carburant, d'autre part.

A cet effet, on a déjà prévu, comme décrit dans la demande de brevet GB-A-2 298 896 (FORD) ou dans la demande de brevet allemand DE-A-38 28 742 (TOYOTA), d'introduire à l'admission un flux de gaz d'échappement recyclés, ce flux étant dirigé dans le cylindre par un conduit qui peut être obtenu par division au moyen d'une paroi de séparation montée à l'intérieur d'un conduit d'admission.

La demande de brevet européen EP-A-0 719 916 (IFP) décrit l'utilisation d'une vanne-papillon disposée dans un conduit d'admission, de façon à favoriser la stratification du flux des gaz d'échappement recyclés lors de l'admission dans le cylindre.

Ces dispositifs ne donnent pas entièrement satisfaction, étant donné qu'ils ne permettent pas de commander avec précision le taux de recyclage des gaz d'échappement à l'admission dans chaque cylindre.

La présente invention a pour objet un dispositif qui puisse être aisément adapté à une architecture existante de moteur à combustion interne, de façon à permettre un réglage fin du taux des gaz d'échappement recyclés introduits à l'admission.

L'invention a également pour objet un tel dispositif, qui ne nécessite pas une modification fondamentale de la culasse du moteur à combustion interne.

Enfin, l'invention a pour objet un dispositif particulièrement simple pour le pilotage du taux d'admission des gaz d'échappement recyclés.

Le dispositif d'admission d'air de l'invention est adapté à un moteur à combustion interne comportant une pluralité de chambres de combustion munies de soupapes d'admission en air et en mélange d'air et de carburant véhiculés par des conduites d'admission. Une conduite de recyclage est piquée sur au moins une conduite d'admission, pour l'admission d'une quantité pilotée de gaz d'échappement recyclés. A l'intérieur de ladite conduite d'admission comportant le piquage de la conduite de recyclage, est montée une cloison mobile parallèlement à l'axe de la conduite d'admission, s'étendant jusqu'à proximité de l'orifice d'admission en étant capable d'obturer le piquage. Ladite cloison présente au voisinage de son extrémité opposée à l'orifice d'admission, une plaque d'obturation radiale.

Selon la position de la cloison mobile à l'intérieur de la conduite d'admission, une quantité plus ou moins important de gaz d'échappement recyclés (EGR) peut ainsi être admise dans la chambre de combustion du cylindre correspondant. On obtient de manière simple une stratification variable des gaz d'échappement recyclés et du mélange frais d'air et de carburant dans le cylindre.

Dans un mode de réalisation, la cloison mobile présente une forme épousant la forme interne de la conduite d'admission dans laquelle elle est montée.

La cloison mobile présente de préférence une excroissance d'obturation dirigée vers l'extérieur, capable de pénétrer dans l'orifice du piquage et de l'obturer.

L'excroissance d'obturation peut avantageusement être de forme générale tronconique, les parois inclinées du cône formant, à l'endroit du piquage, un passage analogue à une buse pour l'admission des gaz d'échappement recyclés.

Le piquage de la conduite de recyclage peut être disposé de façon que l'injection des gaz d'échappement recyclés se fasse dans la conduite d'admission, horizontalement, verticalement ou de manière inclinée par rapport au plan d'admission de la culasse du moteur.

Dans un autre mode de réalisation, le piquage de la conduite de recyclage et la plaque d'obturation radiale sont disposés entre la culasse du moteur et un dispositif répartiteur des flux d'admission et d'échappement, par exemple dans un boîtier approprié.

L'invention a également pour objet un moteur à combustion interne, en particulier un moteur Diesel à injection directe ou un moteur à essence, dans lequel au moins une conduite d'admission comportant un piquage de conduite de recyclage, comprend un dispositif tel qu'indiqué ci-dessus.

Dans un mode de réalisation, toutes ces conduites d'admission comprennent un tel dispositif.

L'invention sera mieux comprise à l'étude de quelques modes de réalisation particuliers décrits de manière plus détaillée et illustrés par les dessins annexés, sur lesquels :
- la figure 1 est une vue schématique de dessus d'un cylindre de moteur à combustion interne pris au niveau de la chambre de combustion ;
- la figure 2 est une vue en coupe selon II-II de la figure 1 dans un premier mode de réalisation ; et
- la figure 3 est une vue en coupe analogue à la figure 2 dans une variante de réalisation.

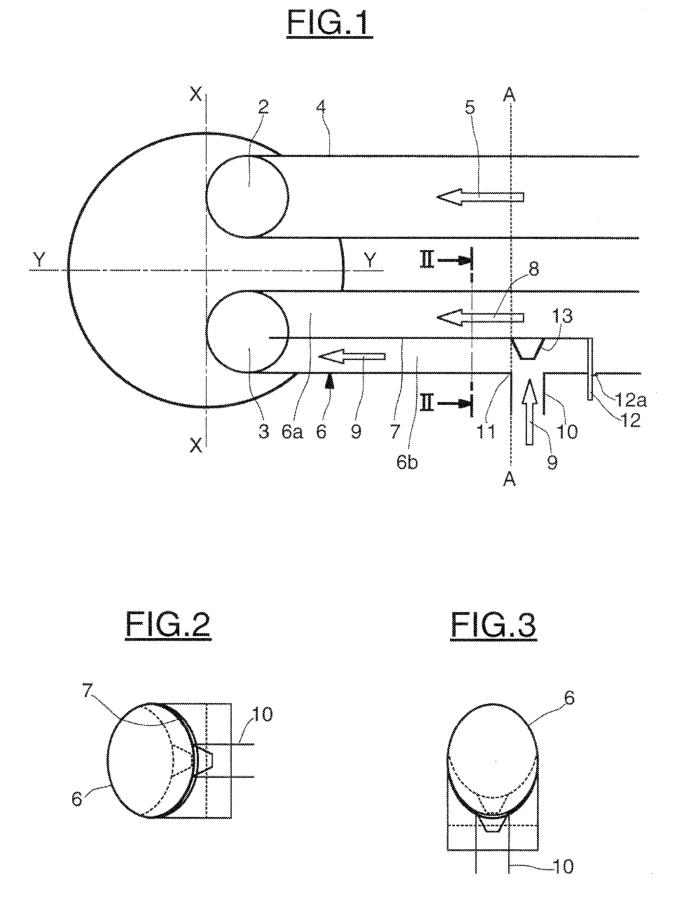

Sur la figure 1, est illustrée schématiquement la partie supérieure de la chambre de combustion d'un cylindre 1 faisant partie d'un moteur à combustion interne qui peut comporter une pluralité de tels cylindres.

Sur la figure 1, ont également été représentés deux orifices d'admission 2 et 3 de deux soupapes d'admission non représentées, disposés d'un côté de l'axe XX du cylindre et de part et d'autre de l'axe perpendiculaire YY du même cylindre. Le premier orifice d'admission 2 est relié à un premier conduit d'admission 4 pour l'admission d'air ou d'un mélange d'air et de carburant, schématisé par la flèche 5.

Le deuxième orifice d'admission 3 est relié à un deuxième conduit d'admission 6, qui est séparé en deux parties par une cloison mobile 7. Une partie 6a du conduit 6 véhicule de l'air ou un mélange d'air et de carburant, tel que schématisé par la flèche 8. La deuxième partie 6b du conduit 6 véhicule des gaz d'échappement recyclés (EGR) symbolisés par les flèches 9 et amenés par une conduite de recyclage 10 qui est piquée en 11 radialement sur le conduit 6. La cloison mobile 7 est disposée d'une manière générale sensiblement parallèlement à l'axe du conduit d'admission 6, comme on peut le voir sur la figure 1. La cloison mobile 7 s'étend, dans l'exemple illustré, jusqu'à l'entrée de l'orifice d'admission 3 en pénétrant en partie au-dessus de celui-ci. Du côté opposé à l'orifice d'admission 3, la cloison mobile 7 présente une plaque d'obturation radiale 12 qui peut traverser la paroi du conduit d'admission 6 par une fente 12a convenablement étanchéifiée. Le piquage 11 est disposé entre la plaque d'obturation 12 et l'extrémité de la cloison mobile 7 qui s'étend en regard de l'orifice d'admission 3.

La cloison mobile 7 présente, en outre, vers l'extérieur, une excroissance d'obturation 13 placée à l'endroit du piquage 11 et capable, de par sa forme, d'obturer l'orifice du piquage 11, arrêtant ainsi le flux des gaz d'échappement recyclés provenant de la conduite de recyclage 10. La forme de l'excroissance d'obturation 13 est sensiblement tronconique dans l'exemple illustré sur les figures annexées. Les faces inclinées de ce tronc de cône peuvent ainsi définir i avec l'orifice de piquage 11, une buse de passage de dimension variable pour l'introduction des gaz d'échappement recyclés par la conduite de recyclage 10, et ce, en fonction de la position de la cloison mobile 7 à l'intérieur du conduit d'admission 6. Bien entendu d'autres formes pourraient être envisagées pour l'excroissance 13 dans la mesure où une obturation et une buse de passage peuvent être obtenues.

De plus, bien que l'on ait représenté sur les figures d'une excroissance d'obturation 13, on comprendra que la cloison mobile puisse être dénuée d'une telle excroissance et obturer simplement le piquage 11.

Comme on peut le voir en particulier sur la figure 2, la cloison mobile 7 présente une forme qui lui permet d'épouser la forme interne du conduit d'admission 6, lorsqu'elle est dans la position obturant le piquage 11, c'est-à-dire dans la position illustrée en trait plein sur la figure 2. La figure 2 illustre, en pointillés, la position la plus ouverte correspondant au taux maximal d'admission des gaz d'échappement recyclés. Dans l'exemple illustré sur la figure 2, la forme de la section du conduit d'admission 6 est approximativement elliptique et la conduite de recyclage 10 est piquée du côté du grand diamètre de l'ellipse pour une injection horizontale des gaz d'échappement recyclés. On maintient ainsi une stratification horizontale des gaz d'échappement recyclés et du mélange d'air et de carburant dans la chambre de combustion du cylindre.

Dans la variante illustrée sur la figure 3, le piquage de la conduite de recyclage 10 est fait du côté du petit diamètre de l' ellipse, de sorte qu'on obtient une injection verticale des gaz d'échappement recyclés.

Sur la figure 1, on a également représenté schématiquement en pointillés le plan AA servant d'interface entre d'une part la culasse du moteur où se trouve en particulier le cylindre 1, et d'autre part le dispositif répartiteur des gaz d'admission et d'échappement. La plaque d'obturation radiale 12, au même titre que la conduite de recyclage 10, sont disposées sous la forme d'un sous-ensemble à l'interface A-A entre la culasse et le répartiteur, ce qui permet de les concevoir de façon simple sans nécessiter une modification de l'architecture de la culasse.

Le déplacement en translation radiale de la cloison mobile 7 est commandé par des moyens, non représentés sur la figure, qui permettent à tout instant de modifier le taux d'admission des gaz d'échappement recyclés en vue de la stratification désirée dans la chambre de combustion du cylindre, l'admission des gaz d'échappement recyclés se faisant en même temps que de l'air ou du mélange frais d'air et le carburant. Le point d'injection des gaz d'échappement recyclés peut être horizontal, comme illustré sur la figure 2, vertical comme illustré sur la figure 3, ou encore incliné.

L'utilisation d'une telle cloison mobile peut être prévue uniquement sur l'un des conduits d'admission d'un cylindre, comme illustré sur la figure 1, ou sur les deux conduits d'admission d'un même cylindre.

L'invention peut être appliquée à toutes les architectures de moteurs à combustion, qu'ils soient à allumage commandé ou de type Diesel, quel que soit le nombre de soupapes, en général huit ou seize soupapes.

## Revendications

1. Dispositif d'admission d'air pour un moteur à combustion interne du type comportant une pluralité de chambres de combustion munies de soupapes d'admission en air et en mélange d'air et de carburant, véhiculés par des conduites d'admission (4, 6), avec en outre une conduite de recyclage (10), piquée sur au moins une conduite d'admission, pour l'admission d'une quantité pilotée de gaz d'échappement recyclés, **caractérisé par le fait qu'**à l'intérieur de ladite conduite d'admission (6) comportant le piquage (11) de la conduite de recyclage, est montée une cloison (7) mobile en translation radialement, ladite cloison étant disposée parallèlement à l'axe de la conduite d'admission (6) et s'étendant jusqu'à proximité de l'orifice d'admission (3) en étant capable d'obturer le piquage (11), ladite cloison présentant au voisinage de son extrémité opposée à l'orifice d'admission, une plaque d'obturation radiale (12).

2. Dispositif selon la revendication 1, **caractérisé par le fait que** la cloison mobile présente une forme épousant la forme interne de la conduite d'admission dans laquelle elle est montée.

3. Dispositif selon les revendications 1 ou 2, **caractérisé par le fait que** la cloison mobile présente une excroissance d'obturation (13) dirigée vers l'extérieur, capable de pénétrer dans l'orifice du piquage et de l'obturer.

4. Dispositif selon la revendication 3, **caractérisé par le fait que** l'excroissance d'obturation (13) est de forme générale tronconique, dont les parois inclinées forment un passage analogue à une buse pour l'admission des gaz d'échappement recyclés.

5. Dispositif selon l'une quelconque des revendications précédentes, **caractérisé par le fait que** le piquage de la conduite de recyclage est disposé de façon que l'injection des gaz d'échappement recyclés se fasse dans la conduite d'admission, horizontalement, verticalement ou de manière inclinée par rapport au plan d'admission de la culasse du moteur.

6. Dispositif selon l'une quelconque des revendications précédentes, **caractérisé par le fait que** le piquage (11) de la conduite de recyclage et la plaque d'obturation radiale (12) sont disposés entre la culasse du moteur et un dispositif répartiteur des flux d'admission et d'échappement.

7. Moteur à combustion interne comportant une pluralité de chambres de combustion munies de soupapes d'admission en air et en mélange d'air et de carburant, véhiculés par des conduites d'admission (4, 6), avec en outre une conduite de recyclage (10), piquée sur au moins une conduite d'admission, pour l'admission d'une quantité pilotée de gaz d'échappement recyclés, **caractérisé par le fait qu'**au moins une conduite d'admission comportant un piquage de conduite de recyclage, comprend un dispositif selon l'une quelconque des revendications précédentes.
